# EUROPEAN PATENT APPLICATION

(11) **EP 1 369 228 A1**
(43) Date of publication of application: **10.12.2003**
(21) Application number: 02711427.1
(22) Date of filing: 08.02.2002
(51) Int. Cl.: B32B 27/34

(54) **POLYIMIDE FILM LAMINATE**

(30) Priority: 09.02.2001 JP 2001034463
(71) Applicant: Amt Laboratory Co., Ltd., Yokkaichi-shi, Mie 512-8052 (JP)
(72) Inventor: ZINBO, Takeshi, Matsudo-shi, Chiba 271-0087 (JP); YAMAMOTO, Miya, Mie-gun, Mie 510-1200 (JP)
(74) Representative: Luderschmidt, Schüler & Partner GbR
(86) International application number: JP0201102
(87) International publication number: WO02064368

(57) **Abstract**

Disclosed is a polyimide film laminate which has a high interlayer peeling strength and which is easily fabricated. The polyimide film laminate in which polyimide films are laminated and bonded to each other, is characterized in that at least two polyimide films each subjected to a plasma surface treatment are superposed and thermocompressively bonded to each other and in that the interlayer peeling strength between the films is at least 0.3 kgf/cm.

## Description

### Technical Field:

The present invention relates to a polyimide film laminate and to a method for the fabrication thereof.

### Background Art:

A polyimide film has been conventionally prepared by a solution film forming method mainly with a casting process. With such a method, it has been difficult or the production efficiency has been extremely low to fabricate a thick film.

An improved method has been proposed in U. S. pat. No. 4,543,295, in which polyimide films are bonded with a thermoplastic polyimide using a heat-laminator or a heat-pressing device. This method has a problem that the heat resistance of the laminate is not high and the method requires a high cost.

A polyimide formed article has been generally prepared by a method in which polyimide powder is directly heated and pressed in a mold or a method in which a press-molded polyimide rod is subjected to a cutting work. Such methods, however, have a problem that it is difficult to fabricate a large formed article.

It is an object of the present invention to provide a polyimide film laminate which has a high interlayer peeling strength and which is easily fabricated and to provide a method for the production thereof.

### Disclosure of the Invention:

The present inventors have made an earnest study with a view toward solving the above-described problems and have completed the present invention.

In accordance with the present invention, there are provided a polyimide film laminate and a method for the fabrication thereof, as follows.
(1) A polyimide film laminate wherein polyimide films are laminated and bonded to each other, characterized in that at least two polyimide films each subjected to a plasma surface treatment are superposed and thermocompressively bonded to each other and in that the interlayer peeling strength between the films is at least 0.3 kgf/cm.
(2) A polyimide film laminate of (1) above, wherein both sides of each of the polyimide films are subjected to a plasma surface treatment.
(3) A polyimide film laminate of (1) or (2) above, wherein the polyimide films are subjected to a plasma surface treatment in an atmosphere containing an oxygen-containing compound.
(4) A polyimide film laminate of (3) above, wherein the oxygen-containing compound is steam or carbon dioxide.
(5) A method for the fabrication of a polyimide film laminate according to any one of (1) through (4) above, characterized in that at least two polyimide films each subjected to a plasma surface treatment are superposed and thermocompressed at a temperature of at least 200°C and a pressure of at least 50 kg/cm² for at least 5 minutes.

The polyimide used in the present invention is a conventionally known substance and may be obtained by polycondensation of an aromatic tetracarboxylic dihydride and an aromatic diamine as main ingredients.

The aromatic tetracarboxylic dihydride which is a component of the polyimide is not specifically limited. Examples of the aromatic tetracarboxylic dihydride include pyromellitic dianhydride, 3,3',4,4'-benzophenonetetracarboxylic dianhydride, 2,2',3,3'-benzophenonetetracarboxylic dianhydride, 2,3,3',4'-benzophenonetetracarboxylic dianhydride, naphthalene-2,3,6,7-tetracarboxylic dianhydride, naphthalene-1,2,5,6-tetracarboxylic dianhydride, naphthalene-1,2,4,5-tetracarboxylic dianhydride, naphthalene-1,4,5,8-tetracarboxylic dianhydride, naphthalene-1,2,6,7-tetracarboxylic dianhydride, 4,8-dimethyl-1,2,3,5,6,7-hexahydronaphthalene-1,2,5,6-tetracarboxylic dianhydride, 4,8-dimethyl-1,2,3,5,6,7-hexahydronaphthalene-2,3,6,7-tetracarboxylic dianhydride, 2,6-dichloronaphthalene-1,4,5,8-tetracarboxylic dianhydride, 2,7-dichloronaphthalene-1,4,5,8-tetracarboxylic dianhydride, 2,3,6,7-tetrachloronaphthalene-1,4,5,8-tetracarboxylic dianhydride, 1,4,5,8-tetrachloronaphthalene-2,3,6,7-tetracarboxylic dianhydride, 3,3'4,4'-diphenyltetracarboxylic dianhydride, 2,2'3,3'-diphenyltetracarboxylic dianhydride, 2,3,3',4'-diphenyltetracarboxylic dianhydride, 3,3",4,4"-p-terphenyltetracarboxylic dianhydride, 2,2",3,3"-p-terphenyltetracarboxylic dianhydride, 2,3,3",4"-p-terphenyltetracarboxylic dianhydride, 2,2-bis(2,3-dicarboxyphenyl )propane dianhydride, 2,2-bis(3,4-dicarboxyphenyl)propane dianhydride, bis(2,3-dicarboxyphenyl)ether dianhydride, bis(3,4-dicarboxyphenyl)ether dianhydride, bis(2,3-dicarboxyphenyl)methane dianhydride, bis(3,4-dicarboxyphenyl)methane dianhydride, bis (2,3-dicarboxyphenyl)sulfone dianhydride, bis(3,4-dicarboxyphenyl)sulfone dianhydride, 1,1-bis(2,3-dicarboxyphenyl)ethane dianhydride, 1,1-bis(3,4-dicarboxyphenyl)ethane dianhydride, perylene-2,3,8,9-tetracarboxylic dianhydride, perylene-3,4,9,10-tetracarboxylic dianhydride, perylene-4,5,10,11-tetracarboxylic dianhydride, perylene-5,6,11,12-tetracarboxylic dianhydride, phenanthrene-1,2,7,8-tetracarboxylic dianhydride, phenanthrene-1,2,6,7-tetracarboxylic dianhydride, phenanthrene-1,2,9,10-tetracarboxylic dianhydride, cyclopentane-1,2,3,4-tetracarboxylic dianhydride, pyrazine-2,3,5,6-tetracarboxylic dianhydride, pyrrolidine-2,3,4,5-tetracarboxylic dianhydride, thiophene-2,3,4,5-tetracarboxylic dianhydride, 4,4'-oxydiphthalic dianhydride and so on, but are not limited to the above compounds. These compounds may be used singly or as a mixture of two or more thereof.

The aromatic diamine which is another component of the polyimide is not specifically limited. Examples of the aromatic diamine include 3,3'-dimethyl-4,4'-diaminobiphenyl, 4,6-dimethyl-m-phenylenediamine, 2,5-dimethyl-p-phenylenediamine, 2,4-diaminomesitylene, 4,4'-methylenedi-o-toluidine, 4,4'-methylenedi-2,6-xylidine, 4,4'-methylene-2,6-diethylaniline, 2,4-toluenediamine, m-phenylenediamine, p-phenylenediamine, 4,4'-diaminodiphenylpropane, 3,3'-diaminodipenylpropane, 4,4'-diaminodiphenylethane, 3,3'-diaminodiphenylethane, 4,4'-diaminodiphenylmethane, 3,3'-diaminodiphenylmethane, 2,2-bis[4-(4-aminophenoxy)phenyl]propane, 4,4'-diaminodiphenyl sulfide, 3,3'-diaminodiphenyl sulfide, 4,4'-diaminodiphenyl sulfone, 3,3'-diaminodiphenyl sulfone, 4,4'-diaminodiphenyl ether, 3,3'-diaminodiphenyl ether, benzidine, 3,3'-diaminobiphenyl, 3,3'-dimethyl-4,4'-diaminobiphenyl, 3,3'-dimethoxybenzidine, 4,4'-diamino-p-terphenyl, 3,3'-diamino-p-terphenyl, bis(p-aminocyclohexyl)methane, bis (p-β-amino-t-butylphenyl) ether, bis (p-β-methyl-δ-aminopentyl)benzene, p-bis(2-methyl-4-aminopentyl)benzene, 1,5-diaminonaphthalene, 2,6-diaminonaphthalene, 2,4-bis(β-amino-t-butyl)toluene, 2,4-diaminotoluene, m-xylene-2,5-diamine, p-xylene-2,5-diamine, m-xylylenediamine, p-xylylenediamine, 2,6-diaminopyridine, 2,5-diaminopyridine, 2,5-diamino-1, 3,4-oxadiazole, piperazine, 1,3-bis(3-aminophenoxy)benzene, 2,5-diaminophenol, 3,5-diaminophenol, 4,4'-(3,3'-dihydroxy)-diaminobiphenyl, 4,4'-(2,2'-dihydroxy)diaminobiphenyl, 2,2'-bis(3-amino-4-dihydroxyphenyl)hexafluoropropane, 2,5-diaminobenzoic acid, 3,5-diaminobenzoic acid, 4,4'-(3,3'-dicarboxy)diaminobiphenyl, 3,3'-dicarboxy-4,4'-diaminodiphenyl ether, ω,ω'-bis (2-aminomethyl)-polydimethylsiloxane, ω,ω'-bis (3-aminopropyl)-polydimethylsiloxane, ω, ω'-bis (4-aminophenyl)-polydimethylsiloxane, ω, ω'-bis (3-aminopropyl)-polydiphenylsiloxane, ω, ω'-bis (3-aminopropyl)-polymethylphenylsiloxane, but are not limited to the above compounds. These compounds may be used singly or as a mixture of two or more thereof.

By reaction of the above acid anhydride compound with the diamine compound in a polar solvent, a polyamic acid solution which is a precursor of a polyimide is obtained.

A polyimide film may be generally obtained by casting the polyamic acid solution on a substrate, and drying the cast solution, followed by imidization at an elevated temperature. Alternatively, after imidizing the polyamic acid solution with heating, the solution is cast on a substrate, dried and heated to obtain a polyimide film.

Any polyimide film may be suitably used for the purpose of the present invention. A multilayer polyimide film or a polyimide film into which various additives are added as desired may be used without any difficulty.

With regard to the thickness of the polyimide film, any desired thickness may be suitably selected. Generally, however, a polyimide film having a thickness of 10 to 150 µm, preferably 25 to 125 µm is suitably used for the purpose of a plasma treatment and lamination by thermocompression bonding.

In the fabrication of a polyimide film laminate of the present invention, the above-described polyimide film is first subjected to a plasma surface treatment. In this case, any known method such as glow discharge may be adopted for the plasma surface treatment.

The plasma surface treatment of a polyimide film may be preferably carried out by impressing a discharge voltage of at least 1,000 V between electrodes of an inner electrode-type low temperature plasma generation apparatus to cause glow discharge. A surface of the polyimide film is contacted to the thus formed low temperature plasma atmosphere.

As a plasma-generating gas for the above low temperature plasma treatment, there may be mentioned helium, neon, argon, nitrogen, oxygen, air, nitrogen suboxide, nitrogen monooxide, nitrogen dioxide, carbon monoxide, carbon dioxide, ammonia, steam, hydrogen, sulfurous acid gas and hydrogen cyanide. These gases may be used singly or as a mixture of two or more thereof.

Above all, an oxygen-containing inorganic gas, more preferably carbon dioxide or steam is especially preferably used.

The pressure of the gas atmosphere within the apparatus is preferably 0.001 to 10 Torr, more preferably 0.1 to 1.0 Torr. A pressure below 0.001 Torr or above 10 Torr is not preferable for reasons of unstable discharge.

When an electric power of 10 W to 100 KW with a high frequency of for example 10 KHz to 2 GHz between discharge electrodes under the above pressure, stable glow discharge can occur. As a charge frequency region, not only a high frequency but also a low frequency, a microwave or a direct current may be used.

As a low temperature plasma generating apparatus, it is preferred that an inner electrode type apparatus be used. However, an outer electrode type apparatus may be used if appropriate. An inductive coupling or a capacity coupling such as a coil furnace may be used.

The shape of the electrodes is not specifically limited. Thus, the electrodes may be of various shapes such as plate-like, ring-like, bar-like and cylinder-like shapes. Further, the electrodes may be of a type in which a metallic interior wall of the treatment apparatus is used as one of the electrodes and is grounded.

In order to impress a voltage of 1,000 volts or more while maintaining stable low temperature plasma, it is necessary to provide an insulation sheath having a high voltage resistance in the input electrode. If the electrode is a naked metal such as copper, iron or aluminum, arc discharge is apt to occur. Thus, it is preferred that the surface of the electrode be covered with an enamel coating, a glass coating, a ceramic coating or the like coating.

When the polyimide film is subjected to a plasma surface treatment in the above-described manner, the treatment may be conducted only for one side thereof. However, it is preferred that both sides be subjected to the plasma surface treatment.

In the present invention, at least two sheets of the thus obtained polyimide films which have been subjected to the plasma surface treatment are superposed and thermocompressively bonded to each other without using an adhesive agent, etc. According to the inventors' study, a laminate which has a high interlayer peeling strength, namely which is not easily delaminated, has been found to be obtainable when a plurality of polyimide films which have been subjected to the plasma surface treatment are superposed and thermocompressively bonded to each other. The interlayer peeling strength is at least 0.3 kgf/cm, preferably at least 0.5 kg/cm. The upper limit of the peeling strength is generally about 5.0 kgf/cm.

When a laminate is produced according to the present invention by superposing a plurality of polyimide films which have been subjected to the plasma surface treatment, a plastic film other than a polyamide film , an adhesive, a metal foil, etc. may be incorporated into the laminate as a part of the constituents thereof.

The term "interlayer peeling strength" as used herein is intended to refer to 180° peeling strength according to JIS Z 0237.

As a thermocompression bonding method used for the thermocompressive bonding of superposed polyimide films each subjected to the plasma surface treatment, the method with heating rolls of metal or rubber can be employed. With respect to the production efficiency, however, it is effective to place cut and superposed films between flat hot plates and to press the films using cylinders. In this case, it is preferred that the heating and pressing be carried out in vacuum for reasons of reducing defects such as formation of bubbles in the resulting laminate. For the purpose of reducing pressure variation in the plane, a mirror plate or a cushioning plate may be used on upper and lower sides of the laminate or between laminates.

Any heating and pressing conditions may be selected. From the standpoint of heat resistance of the laminate product, however, the heating and pressing should be conducted at a temperature of at least 200°C. It is preferred that the heating and pressing be performed at a temperature of at least 250°C, a pressure of at least 50 kg/cm² and for a period of at least 5 minutes. The upper limit of the heating temperature is generally about 400°C and the upper limit of the pressing pressure is generally 1,000 kg/cm².

According to the present invention, at least two sheets, generally 4-2,000 sheets of plasma surface-treated polyimide films are superposed and thermocompressively bonded to obtain a laminate in the form of a sheet or a plate. In the case of the present invention, a laminate having a thickness of, for example, 0.2-100 mm, preferably 0.5-20 mm, may be easily fabricated.

### Example

The present invention will be next concretely described by way of examples. The present invention is, however, not limited to these examples.

### Example 1

A polyimide film ("KAPTON EN"; manufactured by Toray Co., Ltd.; thickness: 50 µm) was subjected to a plasma treatment in its both sides in an atmosphere of carbon dioxide under a pressure of 0.2 Torr at a discharge power density of 300 W·min/m² with an applied high frequency voltage of 110 KHz.

The film was cut into a length of 20 cm. The cut films (10 sheets) were superposed and placed between a pair of 3 mm thick cushioning plate made of a glass tetrafluoroethylene. The assembly was pressed with a vacuum pressing machine (KVHC-PRESS manufactured by Kitagawa Seiki Co., Ltd.) at 350°C and 130 kg/cm² for 30 minutes. After cooling to 100°C, the pressure was released to take out a laminate.

The thus obtained laminate was a plate like laminate having a thickness of 500 µm. The interlayer peeling strength of the laminate was at least 1.0 kgf/mm. It was difficult to peel the film. The laminate was found to withstand a shaping work such as rooter work or drilling work.

The laminate was cut into 20 mm × 20 mm squares and the cut samples were immersed in water at room temperature for 7 days. Thereafter, the samples were immersed in a solder bath for 1 minute at various temperatures continuously increasing at a pitch of 10°C. The highest temperature at which the sample did not show any blistering was determined, whereby the laminate was revealed to have heat resistance of 360°C.

### Example 2

Example 1 was repeated in the same manner as described except that steam was used instead of carbon dioxide, thereby obtaining a laminate having a thickness of 0.5 mm. The laminate had heat resistance of 370°C and withstood various shaping works.

### Example 3

Example 1 was repeated in the same manner as described except that oxygen was used instead of carbon dioxide, thereby obtaining a laminate having a thickness of 0.5 mm. The laminate had heat resistance of 300°C and withstood various shaping works.

### Example 4

Example 1 was repeated in the same manner as described except that argon was used instead of carbon dioxide, thereby obtaining a laminate having a thickness of 0.5 mm. The laminate had heat resistance of 280°C.

### Example 5

Example 1 was repeated in the same manner as described except that the lamination temperature was changed to 230°C, thereby obtaining a laminate having a thickness of 0.5 mm. The laminate had heat resistance of 280°C.

### Example 6

Example 1 was repeated in the same manner as described except that the lamination pressure was changed to 30 kg/cm², thereby obtaining a laminate having a thickness of 0.5 mm. The laminate had heat resistance of 290°C.

### Example 7

Example 1 was repeated in the same manner as described except that the plasma treatment was carried out for only one side of the film and that the sheets were superposed such that the treated surface was in contact with the non-treated surface, thereby obtaining a laminate having a thickness of 0.5 mm. The laminate had heat resistance of 300°C.

### Example 8

Example 1 was repeated in the same manner as described except that 200 sheets of cut films were laminated, thereby obtaining a laminate having a thickness of 10 mm. The laminate had heat resistance of 400°C and withstood various shaping works.

### Example 9

Example 1 was repeated in the same manner as described except that a polyimide film ("UPILEX S" manufactured by Ube Industries Ltd.; thickness: 50 µm) was substituted for "KAPTON EN", thereby obtaining a laminate having a thickness of 0.5 mm. The laminate had heat resistance of 300°C.

### Example 10

Example 1 was repeated in the same manner as described except that 8 sheets of plasma-treated "KAPTON EN" films were interposed between a pair of "UPILEX S" films which were plasma-treated in the same conditions, thereby obtaining a laminate. The laminate had heat resistance of 380°C and withstood various shaping works.

### Comparative Example 1

Example 1 was repeated in the same manner as described except that films without being subjected to a plasma treatment were used, thereby obtaining a laminate. The laminate was easily delaminated with hands.

### Comparative Example 2

Example 1 was repeated in the same manner as described except that the lamination temperature was changed to 130°C, thereby obtaining a laminate. The heating temperature was so low that the laminate was easily delaminated with hands.

According to the present invention, a polyimide film laminate having high interlayer peeling strength may be easily obtained. Such a polyimide laminate may be advantageously used as a forming material and rest, for example, a substrate for a light wave guide and various lining materials.

## Claims

1. A polyimide film laminate wherein polyimide films are laminated and bonded to each other, **characterized in that** at least two polyimide films each subjected to a plasma surface treatment are superposed and thermocompressively bonded to each other and **in that** the interlayer peeling strength between the films is at least 0.3 kgf/cm.

2. A polyimide film laminate as claimed in claim 1, wherein both sides of each of the polyimide films are subjected to a plasma surface treatment.

3. A polyimide film laminate as claimed in claim 1 or 2, wherein the polyimide films are subjected to a plasma surface treatment in an atmosphere containing an oxygen-containing compound.

4. A polyimide film laminate as claimed in claim 3, wherein the oxygen-containing compound is steam or carbon dioxide.

5. A method for the fabrication of a polyimide film laminate according to any one of claims 1 through 4, **characterized in that** at least two polyimide films each subjected to a plasma surface treatment are superposed and thermocompressed at a temperature of at least 200°C and a pressure of at least 50 kg/cm² for at least 5 minutes.
